# EUROPEAN PATENT APPLICATION

(11) **EP 1 693 947 A1**
(43) Date of publication of application: **23.08.2006**
(21) Application number: 04792271.1
(22) Date of filing: 12.10.2004
(51) Int. Cl.: H02K 37/24

(54) **STEPPING MOTOR**

(30) Priority: 03.12.2003 JP 2003404756
(71) Applicant: MINEBEA CO.,LTD., Kitasaku-gun, Nagano 389-0293 (JP)
(72) Inventor: MATSUSHITA, Kunitake MINEBEA CO., LTD., Fukuroi-shi, Shizuoka 437-193 (JP); YAMAWAKI, Takayuki MINEBEA CO., LTD., Fukuroi-shi, Shizuoka 437-193 (JP); NAGATA, Toshihiko MINEBEA CO., LTD., Fukuroi-shi, Shizuoka 437-193 (JP)
(74) Representative: Schickedanz, Willi
(86) International application number: PCT/JP2004/015027
(87) International publication number: WO 2005/055402

(57) **Abstract**

There is provided a stepping motor including: a stator assembly; a rotary shaft which includes a lead screw portion and a plain portion with a rotor magnet disposed thereon, and which has both ends thereof rotatably supported by respective bearings; and a thrust mechanism which includes a resilient member provided in a recess formed at one end of the rotary shaft positioned toward the lead screw portion, and adapted to give an axial thrust force to the rotary shaft, and a point-contact member provided between the resilient member and one bearing of the respective bearings, the one bearing rotatably supporting the one end of the rotary shaft positioned toward the lead screw portion. Thus, the thrust mechanism is located out of and apart from the stator assembly which includes coils to radiate heat, and therefore is prevented from suffering influences from the heat radiated by the coils.

## Description

### FIELD OF THE INVENTION

The present invention relates to a stepping motor as an actuator for use in a floppy disk drive, various office automation equipments, and the like, and more particularly to a stepping motor with a lead screw.

### BACKGROUND OF THE INVENTION

Recently, as the dimensional scale-down and the cost reduction of various electronic apparatuses are demanded, there is also a demand for stepping motors mounted in the apparatuses to become smaller, to deliver higher performance, and to be priced lower. To deal with such a demand, Japanese Patent Application Laid-Open No. H8-186959 discloses a stepping motor with a lead screw, which has a simple structure and still ensures a rotational accuracy good enough to prohibit deterioration of performance of reading and writing information on the disk of a floppy disk drive.

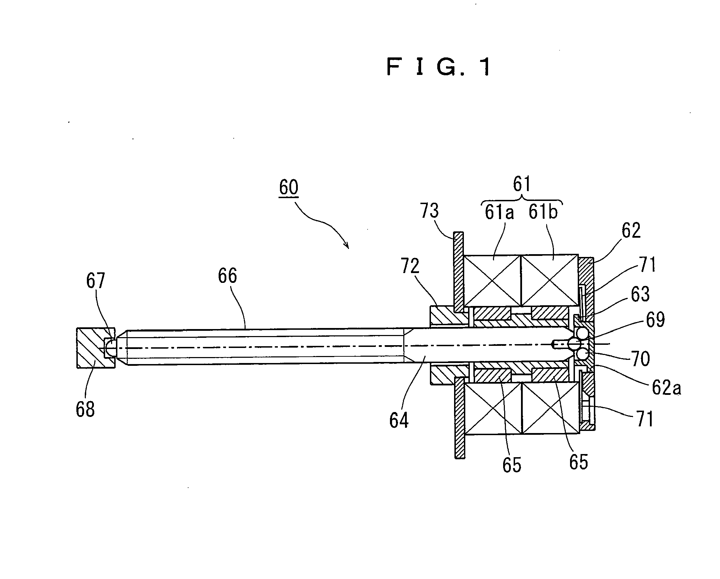

Fig. 1 is a partly cross-sectional view of such a stepping motor as described above. A stepping motor 60 shown in Fig. 1 for use in a floppy disk drive generally includes a stator assembly 61 including an A-phase stator unit 61a and a B-phase stator unit 61b, and a rotary shaft 64 including a plain portion with rotor magnets 65 concentrically fixed thereon and a lead screw portion 66 integrally continuous with the plain portion. A protection cap 62 is fixedly attached to the rear end of the stator assembly 61, and a hole 62a is formed at the center of the protection cap 62. One end of the rotary shaft 64 positioned toward the lead screw portion 66 is rotatably supported at a pivot bearing 68 by means of a ball 67, while the other end of the rotary shaft 64 positioned toward the plain portion is rotatably supported at a pivot bearing 63 by means of balls 69 and 70. Here, a thrust mechanism is structured and operates such that the pivot bearing 63 is movably fitted into the hole 62a of the protection cap 62 so as to be disposed inside the stator assembly 61, and is' axially thrust by a spring 71 thereby axially thrusting the rotary shaft 64 by way of the balls 69 and 70. The stepping motor 60 further includes a positioning bush 72 and a front plate 73. For the purpose of cost reduction, the protection cap 62, the pivot bearing 63, and the positioning bush 72 are made of synthetic resin.

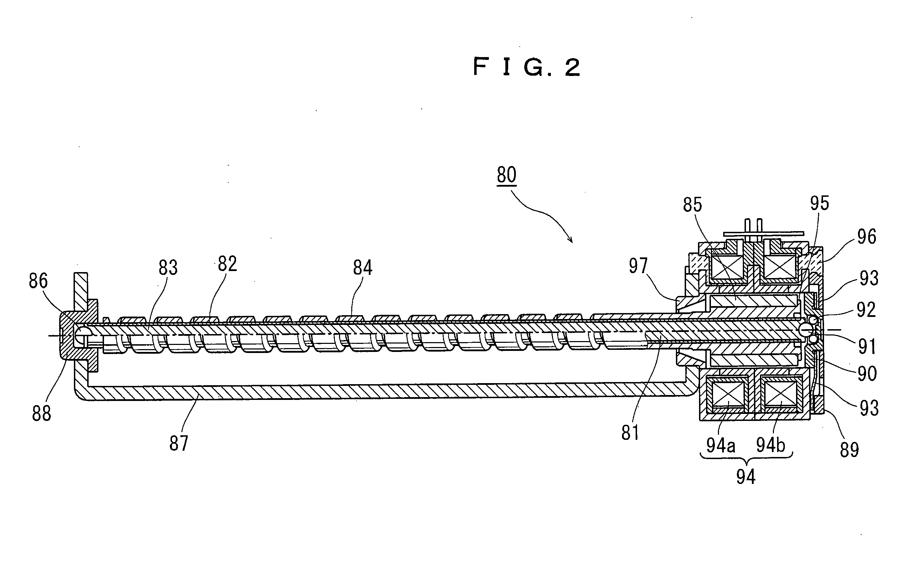

Synthetic resin may be used also for forming a lead screw, and Fig. 2 shows a stepping motor 80 incorporating a lead screw formed of synthetic resin. The stepping motor 80 in Fig. 2 includes a stator assembly 94 composed of an A-phase stator unit 94a and a B-phase stator unit 94b, and a rotary shaft 81 structured such that a metal pipe 82 has its inner and outer surfaces continuously covered by a synthetic resin 83 molded so as to form a plain portion toward one end of the metal pipe 82 and a lead screw portion 84 toward the other end thereof. A rotor magnet 85 is fixedly disposed on the plain portion of the rotary shaft 81 structured as described above. One end of the rotary shaft 81 toward the lead screw portion 84 is rotatably supported by means of a ball 86 at a bearing 88 attached to a bracket 87, and the other end of the rotary shaft 81 toward the plain portion is rotatably supported at a pivot bearing 90 by means of balls 91 and 92. A protection cap 89 having a hole at its center is attached to the B-phase stator unit 94b by means of bosses 96 and adapted to protect the pivot bearing 90. Here, a thrust mechanism is structured and operates such that the pivot bearing 90 is movably fitted inside a yoke 95 of the B-phase stator unit 94b, also movably fitted into the hole of the protection cap 89, and is axially thrust by a spring 93 thereby axially thrusting the rotary shaft 81 by way of the balls 91 and 92. The stepping motor 80 further includes a positioning bush 97. The protection cap 89, the pivot bearing 90, and the positioning bush 97 are made of synthetic resin for cost reduction.

In the stepping motor 60 with a lead screw shown in Fig. 1, when the rotary shaft 64 with the magnets 65 is rotated, heat is radiated from coils disposed inside the stator units 61a and 61b and is kept inside the stator assembly 61 which is almost hermetically closed with a minute clearance provided between the pivot bearing 63 and the protection cap 62 for allowing the pivot bearing 63 to be axially moved by force of the spring 71. Consequently, the pivot bearing 63, which is made of synthetic resin and susceptible to high temperature, undergoes a dimensional change due to the heat kept inside the stator assembly 61, and if the outer dimension of the pivot bearing 63 is changed to increase, the clearance provided between the pivot bearing 63 and the protection cap 62 is diminished to disappear, which causes generation of friction torque therebetween and therefore prohibits the pivot bearing 63 from freely moving thus failing to duly transfer the thrust force of the spring 71 to the rotary shaft 64. If the clearance is set larger in consideration of the problem, then the positioning accuracy is sacrificed, and the pivot bearing 63 is caused to jolt thereby making noise. Further, the spring 71 to generate the thrust force can be affected by the heat, thus worsening the problem.

In the stepping motor 80 with a lead screw shown in Fig. 2, when the rotary shaft 81 with the magnet 85 is rotated, heat is radiated from coils disposed inside the stator units 94a and 94b and is kept inside the stator assembly 94 which is almost hermetically closed with minute clearances provided respectively between the pivot bearing 90 and the yoke 95 and between the pivot bearing 90 and the protection cap 89 for allowing the pivot bearing 90 to be axially moved by force of the spring 93. Consequently, the pivot bearing 90, which is made of synthetic resin and susceptible to heat, undergoes a dimensional change due to the heat kept inside the stator assembly 94, and if the outer dimension of the pivot bearing 90 is changed to increase, the clearances provided between the pivot bearing 90 and the yoke 95 and between the pivot bearing 90 and the protection cap 89 are diminished to disappear, which causes generation of friction torque therebetween and therefore prohibits the pivot bearing 90 from freely moving thus failing to duly transfer the thrust force of the spring 93 to the rotary shaft 81. If the clearances are set larger in consideration of the problem, then the positioning accuracy is sacrificed, and the pivot bearing 90 is caused to jolt thereby making noise. Further, the spring 93 to generate the thrust force can be affected by the heat, thus worsening the problem.

### SUMMARY OF THE INVENTION

The present invention has been made in light of the above problems resulting from a thrust mechanism being disposed within a stator assembly which includes coils to radiate heat, and inside which the heat from the coils is kept, and it is an object of the present invention to provide a stepping motor, in which thrust force to axially move a rotary shaft is not influenced by heat radiated from stator coils thus improving motor performance.

In order to achieve the object described above, according to an aspect of the present invention, there is provided a stepping motor including: a stator assembly; a rotary shaft which includes a lead screw portion and a plain portion with a rotor magnet disposed concentrically thereon so as to face an inner circumference of the stator assembly, and which has both ends thereof rotatably supported by respective bearings; and a thrust mechanism. The thrust mechanism is provided at one end of the rotary shaft positioned toward the lead screw portion, and is structured such that a resilient member is provided in a recess formed at the one end of the rotary shaft positioned toward the lead screw portion, and a point-contact member is provided between the resilient member and one bearing of the respective bearings, the one bearing rotatably supporting the one end of the rotary shaft positioned toward the lead screw portion. With the structure described above, thrust force is given by the resilient member to the rotary shaft in the axial direction.

Since the thrust mechanism to give an axial thrust force to the rotary shaft is disposed out of and apart from the stator assembly having coils to radiate heat, the relevant components of the thrust mechanism, even if made of heat-susceptible materials, are kept free from influences of the heat radiated by the coils. Consequently, a constant thrust force can be stably generated and transmitted to the rotary shaft without rattling noises generated by the jolting movement resulting from the sacrifice of the positioning accuracy, and the performance of a stepping motor is enhanced. In the aspect of the present invention, the resilient member may be a coil spring, and the point-contact member may be a spherical body made of steel. Consequently, the thrust mechanism can be simply structured with reduced cost, and this enhances the assembly efficiency thereby achieving cost reduction of the stepping motor.

### BRIEF DESCRIPTION OF THE DRAWINGS

Fig. 1 is a partly cross-sectional view of a conventional stepping motor;
Fig. 2 is a partly cross-sectional view of another conventional stepping motor;
Fig. 3 is a side view (partly sectioned) of a stepping motor according to a first embodiment of the present invention;
Fig. 4 is a side view (partly sectioned) of a stepping motor according to a second embodiment of the present invention; and
Fig. 5 is a side view (partly sectioned) of a stepping motor according to a third embodiment of the present invention.

### DETAILED DESCRIPTION OF THE PREFERRED EMBODIMENTS

Preferred embodiments of the present invention will be described with reference to the accompanying drawings.

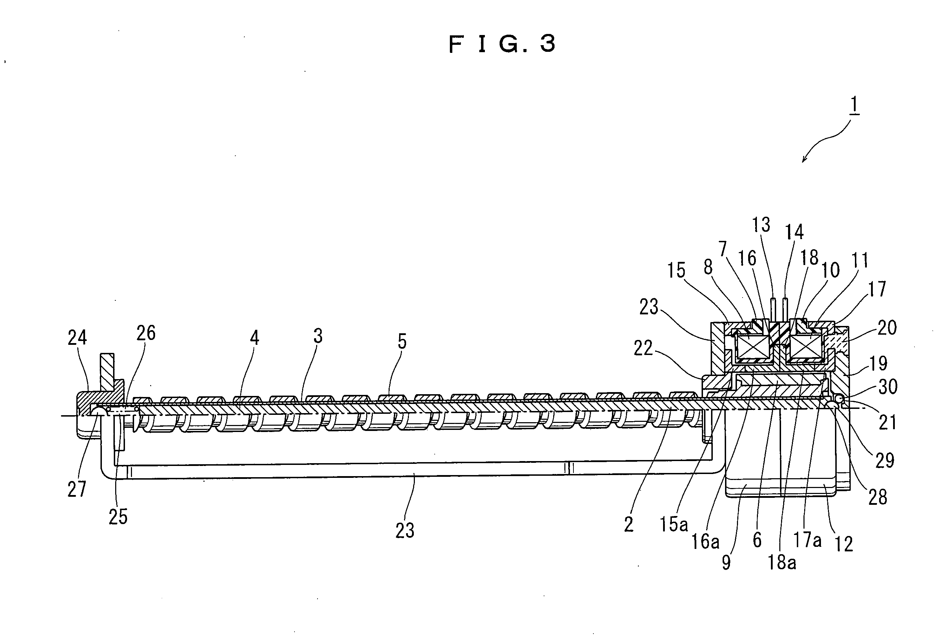

Referring to Fig. 3, a stepping motor 1 with a lead screw according to a first embodiment of the present invention includes a stator assembly which is composed of an A-phase stator unit 9 and a B-phase stator unit 12, and a rotary shaft 2 which is structured such that a metal pipe 3 has its inner and outer surfaces continuously covered by a synthetic resin 4 molded so as to form a plain portion toward one end of the metal pile 3 and a lead screw portion 5 toward the other end thereof, thus the plain portion and the lead screw portion 5 are formed integrally with each other. A rotor magnet 6 is fixedly disposed on the plain portion of the rotary shaft 2 structured as described above. Among the most suitable materials for the synthetic resin 4 are, for example, polyphenylene sulfide (PPS) and polyoxymethylene (POM).

The A-phase stator unit 9 includes a bobbin 7 which has a coil 8 wound therearound, and which is provided with terminal pins 13, and further includes yokes 15 and 16 which have respective pole teeth 15a and 16a at their inner circumferences. The B-phase stator unit 12 includes a bobbin 10 which has a coil 11 wound therearound, and which is provided with terminal pins 14, and further includes yokes 17 and 18 which have respective pole teeth 17a and 18a at their inner circumferences. The A-phase and B-phase stator units 9 and 12 structured as described above are disposed so as to surround the magnet 6, such that the pole teeth 15a, 16a, 17a and 18a face the outer circumferential surface of the magnet 6.

A pivot bearing 19 made of synthetic resin and having a circular recess 21 at the center is attached at one side of the B-phase stator unit 12 by means of bosses 20, and a bracket 23 having a positioning bush 22 attached at its proximal end and having a bearing 24 attached at its distal end is attached at one side of the A-phase stator unit 9.

The rotary shaft 2 has a recess 25 at an end thereof toward the lead screw portion 5, a resilient member 26 such as a coil spring is housed in the recess 25, and the end of the rotary shaft 2 toward the lead screw portion 5 is rotatably supported at the bearing 24 by means of a point-contact member 27 disposed at one end of the resilient member 26. The rotary shaft 2 has a recess 28 at an end thereof toward the plain portion, a ball 29 is disposed in the recess 28, a plurality of balls 30 are disposed in the recess 21 of the pivot bearing 19, and the end of the rotary shaft 2 toward the plain portion is rotatably supported at the pivot bearing 19 by means of the balls 29 and 30. The point-contact member 27 may be a spherical or semispherical body made of metal or ceramic and, in the present embodiment, is constituted by a spherical body made of steel that is preferable in terms of cost. The resilient member 26 and the point-contact member 27 in combination make up a thrust mechanism which, while the point-contact member 27 is supported by the bearing 24, is adapted to give thrust force to the rotary shaft 2 in the axial direction.

The balls 29 and 30 are made of steel, ceramic, or the like, wherein steel is preferable in terms of cost. The pivot bearing 19 and the bearing 24 may be made of metal, but when they are made of synthetic resin, cost is reduced, slidability is enhanced, and sliding noise is lowered. Polyphenylene sulfide (PPS), polyoxymethylene (POM), and the like are among the synthetic resin suitable for forming the components.

The positioning bush 22 may preferably be made of, for example, polyphenylene sulfide (PPS), polybuthylene terephthalate (PBT), and the like.

As described above and as shown in Fig. 3, in the stepping motor 1, the thrust mechanism is provided out of the stator assembly so as to be located apart from the coils 8 and 11 as heat sources, and therefore does not suffer influences from the heat radiated by the coils 8 and 11. Consequently, consideration in determining the clearance about the thrusting means is not necessary, and therefore the positioning accuracy is not sacrificed thus preventing the noise problem while ensuring a stable thrust force applied to the rotary shaft 2 in the axial direction. As a result, the performance of the stepping motor is enhanced.

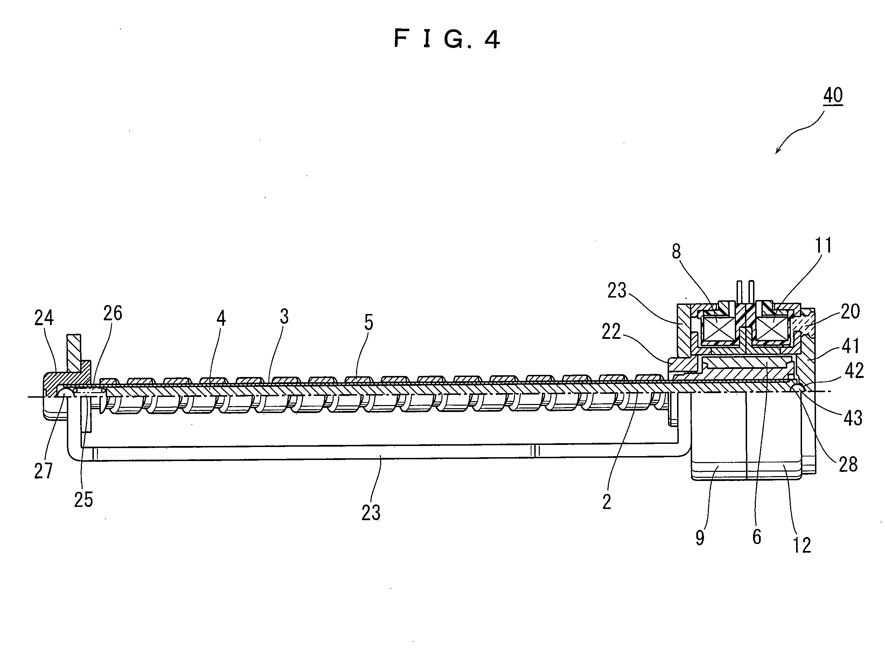

Referring to Fig. 4, a stepping motor 40 with a lead screw according to a second embodiment of the present invention has the same structure as the stepping motor 1 shown in Fig. 3 except a pivot bearing 41, and description will be made with focus put on the difference using the same reference numbers for the same components.

In the stepping motor 40 according to the: second embodiment, a rotary shaft 2 has a recess 28 at an end thereof toward a plain portion, a ball 43 is partly housed in the recess 28, the aforementioned pivot bearing 41 has a hemispherical recess 42 shaped so as to partly enclose the ball 43, and the end of the rotary shaft 2 toward the plain portion is rotatably supported at the pivot bearing 41 by means of the ball 43, while the support mechanism for the end of the rotary shaft 2 toward a lead screw portion 5 has the same structure as that of the stepping motor 1 of Fig. 3, that is to say, the rotary shaft 2 has a recess 25 at an end thereof toward the lead screw portion 5, a resilient member 26 such as a coil spring is housed in the recess 25, and the end of the rotary shaft 2 toward the lead screw portion 5 is rotatably supported at a bearing 24 by means of a point-contact member 27 disposed at one end of the resilient member 26.

Thus, in the stepping motor 40, the plurality of balls 30 shown in the stepping motor 1 of Fig. 3 are eliminated thereby reducing the number of components, and at the same time the ball 43 can be duly positioned and set with less difficulty. The ball 43 may be made of steel, ceramic, and the like, wherein steel is preferable in terms of cost. The ball 43 may be in point-contact with the spherical surface of the recess 42 at one point or multiple points. In case of point-contact at multiple points, if the pivot bearing 41 is made of synthetic resin, the slidability is assured without applying grease, but friction loss can be reduced with grease application.

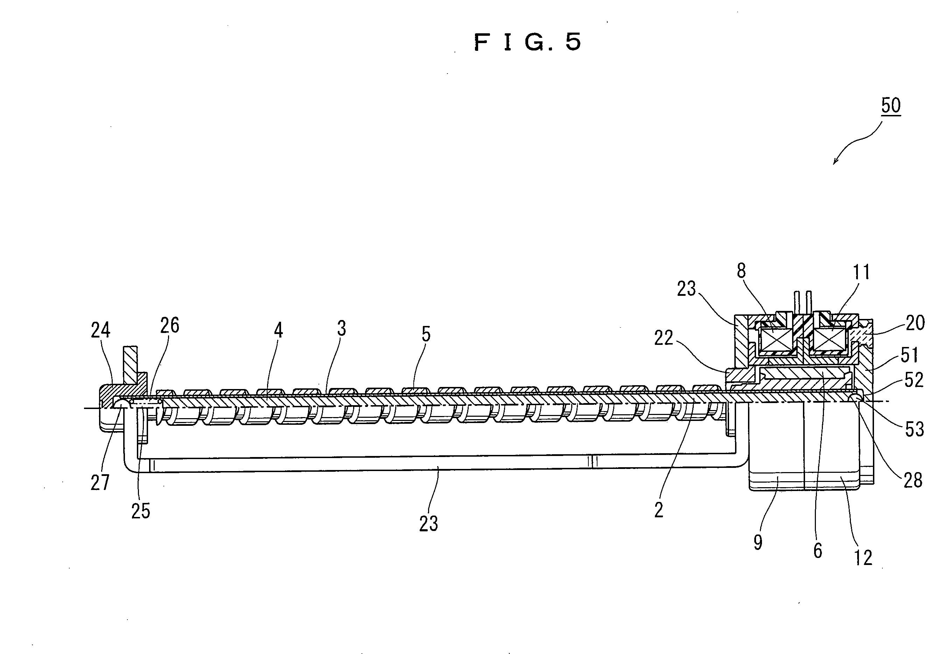

Referring to Fig. 5, a stepping motor 50 with a lead screw according to a third embodiment of the present invention has the same structure as the stepping motor 1 shown in Fig. 3 except a pivot bearing 51, and description will be made with focus put on the difference using the same reference numbers for the same components.

In the stepping motor 50 according to the third embodiment, a rotary shaft 2 has a recess 28 at an end thereof toward a plain portion, a ball 53 is partly housed in the recess 28, the aforementioned pivot bearing 51 has a circular recess 52 with a plane bottom, and the end of the rotary shaft 2 toward the plain portion is rotatably supported at the pivot bearing 51 by means of the ball 53 making point-contact with the plane bottom surface of the recess 52, while the support mechanism for the end of the rotary shaft 2 toward a lead screw portion 5 has the same structure as that of the stepping motor 1 of Fig. 3, that is to say, the rotary shaft 2 has a recess 25 at an end thereof toward the lead screw portion 5, a resilient member 26 such as a coil spring is housed in the recess 25, and the end of the rotary shaft 2 toward the lead screw portion 5 is rotatably supported at a bearing 24 by means of a point-contact member 27 disposed at one end of the resilient member 26.

Thus, in the stepping motor 50, the plurality of balls 30 used in the stepping motor 1 of Fig. 3 are eliminated thereby reducing the number of components, and at the same time the ball 53 is in point-contact with the plane bottom surface of the recess 52 at one point thus reducing the loss resulting from friction. The ball 53 may be made of steel, ceramic, and the like, wherein steel is preferable in terms of cost.

The pivot bearings 41 and 45 can be made of metal, but if they are made of synthetic resin as the pivot bearing 19, cost is reduced, slidability is enhanced, and sliding noise is lowered. Polyphenylene sulfide (PPS), polyoxymethylene (POM), and the like are among the synthetic resin suitable for forming the components.

The ball 29, 43 or 53 may be fitted into the recess 28 formed at the end of the rotary shaft 2 toward the plain portion, or may be welded to the end of the rotary shaft 2 toward the plain portion. Alternatively, the end of the rotary shaft 2 toward the plain portion, may be shaped hemispherical thereby replacing the ball 29, 43 or 53.

Also, the lead screw is formed of synthetic resin for reducing weight and improving slidability in the embodiments described above, but the present invention is not limited to such a structure, and the lead screw may be made of metal.

And, the rotary shaft is structured such that the lead screw portion is formed integrally with the plain portion in the embodiments described above, but may alternatively be structured such that the lead screw portion is discretely produced and fixedly jointed to the plain portion by an appropriate method.

### INDUSTRIAL APPLICABILITY

The present invention discloses a stepping motor to function as an actuator for use in a floppy disk drive and various office automation equipments, thus providing industrial applicability.

## Claims

1. A stepping motor comprising:
a stator assembly (9 + 12);
a rotary shaft (2) including a lead screw portion (5) and a plain portion which has a rotor magnet (6) disposed concentrically thereon so as to face an inner circumference of the stator assembly (9 + 12), the rotary shaft (2) having both ends thereof rotatably supported by respective bearings (19, 24); and
a thrust mechanism,
**characterized in that** the thrust mechanism is disposed at one end of the rotary shaft (2) positioned toward the lead screw portion (5), and is structured such that a resilient member (26) is provided in a recess (25) formed at the one end of the rotary shaft (2) positioned toward the lead screw portion (5), and a point-contact member (27) is provided between the resilient member (26) and one bearing (24) of the respective bearings (19, 24), the one bearing (24) rotatably supporting the one end of the rotary shaft (2) positioned toward the lead screw portion (5), wherein thrust force is given by the resilient member (26) to the rotary shaft (2) in an axial direction.

2. A stepping motor according to Claim 1, wherein the resilient member (26) is a coil spring, and the point-contact member (27) is a spherical body made of steel.
